# EUROPEAN PATENT APPLICATION

(11) **EP 2 658 335 A1**
(43) Date of publication of application: **30.10.2013**
(21) Application number: 13164648.1
(22) Date of filing: 22.04.2013
(51) Int. Cl.: H04W 76/02, H04W 88/06

(54) **Method and Mobile Terminal for Establishing Calls in a Wireless Communications Network**

(30) Priority: 24.04.2012 ES 201230604
(71) Applicant: Vodafone IP Licensing Limited, The Connection Newbury Berkshire RG14 2FN (GB); Vodafone España, S.A.U., 28108 Alcobendas (ES)
(72) Inventor: Gomez, Alfonso, 28150 Madrid (ES); Dominguez Gonzalez, Rafael, 28108 Alcobendas (ES)
(74) Representative: Boult Wade Tennant

(57) **Abstract**

The invention relates to a cellular communication network serving mobile terminals or devices and, more precisely to a method regarding how to place calls, voice or video, between User Equipments [UE] using Circuit Switch [CS].

## Description

### FIELD OF THE INVENTION

The invention relates to a system, method and apparatus for optimizing voice communications between User Equipments in mobility in a radio communication network.

The object of the invention allows better quality and less jitter for users using mobility services such as mobile IP.

### BACKGROUND

With the rising level of penetration of smartphones or internet connected mobile devices, end users demand higher volumes of data transfer but still needing their devices as being able to establish voice communications.

The current generation of smartphones (e.g. i-Phone, Google Nexus One) make available to the end user a huge number of client applications, many of them causing a frequent transmission and reception of small amounts of data (e.g. Weather forecast, Facebook messages, etc.). Most Unified Communications soft-clients offer value added services such as Instant Messaging, Presence features, integration with Calendar and Corporate Directory, collaboration tools and in some cases they offer integration with VoIP capabilities.

For voice purposes, the problem arises when the user is in mobility (e.g. using a laptop out of the LAN) using a SIM based connection. He can use a Wireless Packet Switch connectivity to have these features. If voice capabilities use the Packet Switch connectivity problems like low bandwidth, jitter and high RTT turn into poor voice quality, loose of interactivity, echo...reduce the signalling load without significantly impacting the user experience.

Currently, Unified Communications software uses the same Packet Switch connection for data and voice. For mobile devices such as a Smartphone, PC's with embedded SIM or USB stick with SIM card, this connection is a Packet Switched Radio connection, for both Data and Voice; new smartphones can either use Circuit Switched [CS] voice network or Packet Switched [PS] data network.

### SUMMARY OF THE INVENTION

According to one embodiment of the invention, there are provided a method for reducing the load signalling in a cellular communications network as claimed and a mobile terminal for carrying out said method. The method and mobile terminal hereby described are based on the integration the User Equipment [UE] Circuit Switch [CS] capabilities within the Unified Communications soft-client.

Then the Unified Communication software has two different interfaces against the network:
- One for the software data: This can be any IP connectivity in mobility such as Packet Switch Radio, Wifi, etc. This connection to the Unified Communications Server does not require high reliability, low jitter and low packet loss.
- A Radio Access Circuit Switch connection for voice or video capabilities providing a reliable channel for these types of data.

This solution provides a high quality voice channel, allowing mobility and offering a complete integration with the soft-client. This means that there is no need to use any other software in order to offer high quality voice capabilities in mobility and data exchange with the server (for Instant Messaging- IM, Calendar, collaboration tools, mail, Corporate Directory)

### BRIEF DESCRIPTION OF THE DRAWINGS.

For a better understanding of the present invention, reference will now be made, by way of example only, to the accompanying drawings in which:

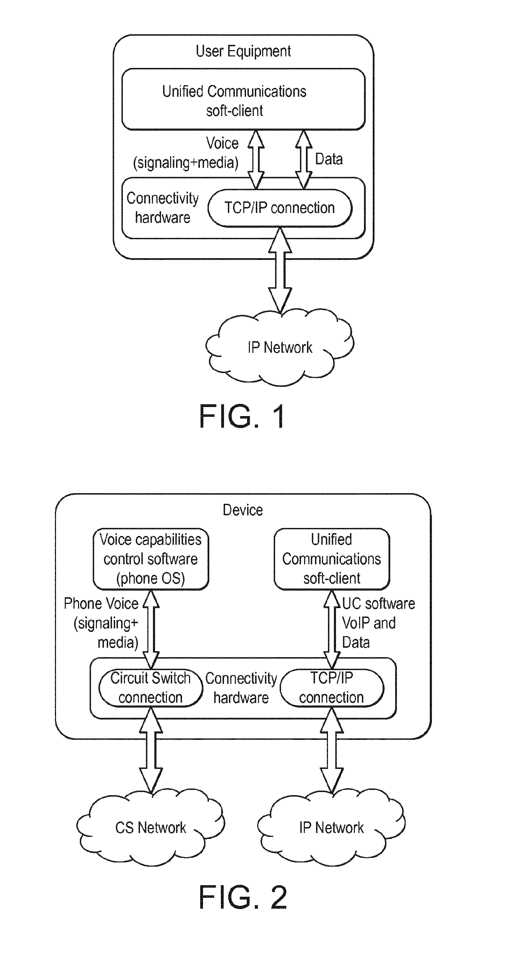

- Figure 1 depicts a block diagram of the prior art;
- Figure 2 depicts block diagram of the prior art;

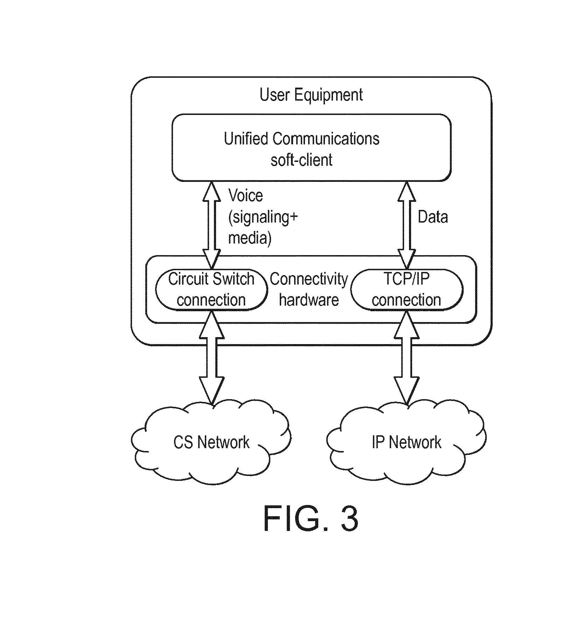

- Figure 3 depicts a block diagram of the method of the invention; and

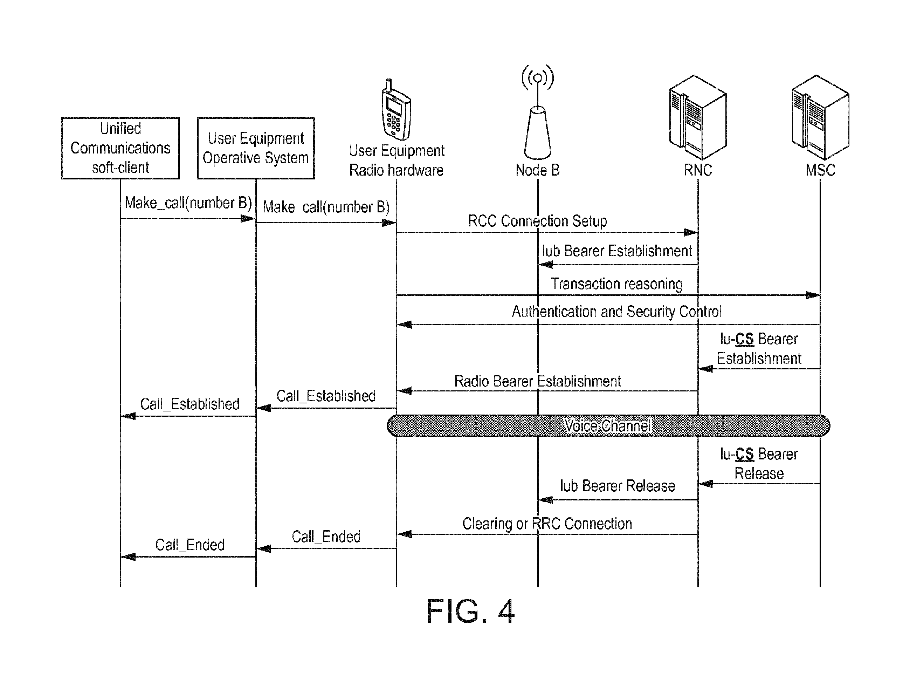

- Figure 4 depicts a block diagram of the method of the invention at network level.

### DETAILED DESCRIPTION OF A PREFERRED EMBODIMENT

Following the reference signs adopted in the figures, there now follows a more detailed description of an embodiment of the invention.

In a preferred embodiment of the invention a user brings into play a User Equipment [U], namely a mobile terminal, via a Unified Communications software, to place a call (voice or video) to a phone number, a destination number. Said user may have obtained this number via the Unified Communications software from a Corporate Directory, or from an email, or by selecting a Contact of an Instant Messaging tool or by dialling the number manually or from its agenda or by any other mean provided by the software. Depending on the network quality, the Voice over IP [VoIP] or Video over IP would be reliable or not depending on the specific network status. Monitoring of the quality of an established Packet Switched [PS] connection, either via signalling messages or a quality checker process in background, the User Equipment [UE] is able to determine whether the Voice or Video over IP should be possible.

If the parameters monitoring trespass certain threshold values, the User Equipment [UE], by means of its Operating System [OS] and a software client, makes use of Circuit Switch [CS] capabilities when a voice or video call is required by the end user. If the Packet Switched [PS] connection is established over GSM, GPRS or EDGE, radio hardware of the User Equipment [UE] will automatically select a Circuit Switch [CS] channel to make the call.

Parameters or values to look into in order to determine whether a call over Packet Switched [PS] is possible or not, depend on the type of call (video + voice, or only voice), and whether a 3G chipset of the User Equipment [UE] allows the reading of 3G values (manufacturer decision). The parameters reflect a set of minimum conditions to be achieved in order to have an acceptable quality call, if said parameter values are not, at least matched, then the call is established over 3G:

| Parameter | Checking method | Threshold Value | Minimum / maximum |
|---|---|---|---|
| Bandwidth | Background / 3G parameter | 110 kbps | Minimum |
| Round trip time | Background / 3G reading | 400 ms | Maximum |
| Jitter | Background | 100 ms | Maximum |
| Received Power | 3G reading | -109 dBm | Minimum |
| Pilot strength (Ec/Io) | 3G reading | -16 | Minimum |

This will turn into a software client primitive to the Operating System [OS] for the Radio hardware to start a Circuit Switch [CS] channel. Sais primitives could be a simplified set: Make_Call, Call_Established and Call_Ended as a generic representation independent of the software programming language, the Operating System [OS] or Hardware/Firmware.

When the user decides to make a call, through the User Equipment [UE] via the Graphical User interface [GUI], the software client sends a Make_Call primitive to the Operating System [OS] with the destination number [B number] as a parameter. The Operating System [OS] controlling the Radio hardware of the User Equipment [UE] sends a command to a Radio Network controller [RNC] and/or a Node B for opening a Circuit Switch [CS] connection to the destination number.

The Radio hardware establishes a control channel and only then a Circuit Switch [CS] traffic channel to the Operator MSC is also established. Once a Radio Bearer [RB] is ready, the call will be sent to a Mobile Switching Center [MSC] and the Operator will route the call to the destination, the earlier described B number.

Once the call is ended by the user or a B party, all the resources are released.

In another preferred embodiment when the quality value of the PS connection of a certain user is not enough to maintain a VoIP call, this status could be shared by the Unified Communication Software. If a call is to be done to the mentioned user, the software client is to make the call over a Circuit Switched channel even though the IP channel is good enough for the second user.

## Claims

1. Method for establishing calls in a wireless communication network sending a Make Call command to a radio hardware of a Mobile Terminal including a destination number as a parameter in said command, **characterised by** comprising at least the steps of:
- opening a Circuit Switch [CS] connection to that destination number when at least one of the following conditions is met:
a. bandwidth is determined to be of at least a bandwidth threshold value,
b. round trip time is determined to be of a maximum roundtrip threshold value
c. jitter is determined to be of a maximum jitter value,
d. received power is determined to be at least a received power level threshold value, and
e. pilot strength [Ec/Io] is determined to be at least a pilot strength [Ec/Io] threshold value.

2. Method according to claim 1 wherein the opening further comprises establishing a control channel and a Circuit Switch [CS] traffic channel to the Operator Mobile Switching Center [MSC] by means of the radio hardware, the radio hardware sending the call to the Mobile Switching Center [MSC], routing the call to the destination number and establishing a Radio Bearer [RB].

3. Method according to either claim 1 or 2 wherein the conditions are determined by carrying out at least one of the following procedures:
- using signalling messages, and
- using a quality checker process in background.

4. Method according to either claim 1 or 2 wherein the bandwidth value is determined by a Background / 3G parameter.

5. Method according to any of the above claims, wherein the maximum jitter value is set at 100 ms.

6. Mobile terminal for establishing calls in a wireless communication network sending a Make Call command to a radio hardware of said Mobile Terminal including a destination number as a parameter in said command, **characterised by** comprising:
● a Radio Bearer [RB], for establishing a Circuit Switch [CS] connection to that destination number,
● at last two different interfaces against the wireless communication network:
● a first interface for a software data adapted to provide IP connectivity in mobility, and
● a second interface defined by a Radio Access Circuit Switch connection for voice and/or video capabilities adapted to provide a channel for these types of data.

7. Mobile terminal according to claim 6 wherein the IP connectivity in mobility is Packet Switch Radio.

8. Mobile terminal according to claim 6 wherein the IP connectivity in mobility is Wifi.

9. Mobile terminal according to claim 6 where the mobile terminal comprises a mobile handset executing a UC client application.

10. Mobile terminal according to claim 6 **characterised by** comprising a processing device and a handset, the handset being logically coupled to the processing device and the processing device executing a UC client application
